# EUROPÄISCHE PATENTANMELDUNG

(11) **EP 0 780 571 A2**
(43) Veröffentlichungstag der Anmeldung: **25.06.1997**
(21) Anmeldenummer: 96250294.4
(22) Anmeldetag: 20.12.1996
(51) Int. Cl.: F03B 13/00

(54) **Miniatur-Wasserturbinengenerator**

(30) Priorität: 21.12.1995 DE 19549235
(71) Anmelder: Euro EMC Service Dr. Hansen GmbH, 14513 Teltow (DE)
(72) Erfinder: Hansen, Diethard, Dr.-Ing., 8965 Berikon 2 (CH); Schreiber, Thomas, Dipl.-Ing., 12277 Berlin (DE); Ristau, Detlef, Dr.-Ing.-Habil., 12435 Berlin (DE); Roth, Eva, Dipl.-Ing., 12105 Berlin (DE)
(74) Vertreter: Hengelhaupt, Jürgen, Dipl.-Ing.

(57) **Zusammenfassung**

Die Erfindung beschreibt einen Miniaturgenerator zur Erzeugung elektrischer Energie aus einem strömenden Medium und ist anwendbar zur kontinuierlichen Elektroenergieversorgung überall dort, wo elektrische Zuleitungen Störungen oder Gefahren verursachen könnten, beispielsweise zur Energieversorgung von Sensoren zur Messung elektrischer und magnetischer Feldkomponenten.
Der erfindunsgemäße Miniaturgenerator ist dadurch gekennzeichnet, daß in einem gemeinsamen Gehäuse zwei Turbinenräder (1a, 1b) über eine Achse (2) starr miteinander verbunden sind, die Turbinenräder (1a, 1b) in ihrem inneren Permanentmagnete (3) aufweisen, zwischen den Turbinenrädern (1a, 1b) Magnetspulen (4) angeordnet sind und das Gehäuse Kanäle (8) zur Zu- und Ableitung der strömenden Medien aufweist.

## Beschreibung

Die Erfindung betrifft einen Miniaturgenerator zur Erzeugung elektrischer Energie aus einem strömenden Medium und ist anwendbar zur kontinuierlichen Elektroenergieversorgung überall dort, wo elektrische Zuleitungen Störungen oder Gefahren verursachen könnten, beispielsweise zur Energieversorgung von Sensoren zur Messung elektrischer und magnetischer Feldkomponenten.

Es ist bekannt, die Energieversorgung von elektrischen Geräten, bei welchen elektrische Zuleitungen Störungen oder Gefahren verursachen könnten, durch Batterien oder Akkumulatoren zu realisieren.
Die Batterien bzw. Akkumulatoren haben jedoch nur eine begrenzte Lebensdauer bzw. eine begrenzte Kapazität und sind daher nur in eingeschränktem Maße einsetzbar. Außerdem verursachen die Batteriewechselzyklen hohe Kosten und es entstehen Entsorgungsprobleme bezüglich der verbrauchten, beschädigten Batterien und Akkumulatoren. Auch kommt es zu Pausen- und Stillstandszeiten aufgrund von Batteriewechseln.

Weiterhin ist es bekannt, Turbinen zur Energieerzeugung beispielsweise aus Wasserkraft oder Wind einzusetzen.
Durch die Turbinen werden Generatoren angetrieben, die sich jedoch aufgrund ihrer einsatzbedingten Konstruktion nicht für Miniaturgeneratoren eignen.

In der US 4,963,780 wird ein durch Wasser angetriebener Generator beschrieben, welcher in der häuslichen Sanitärinstallation Anwendung findet. Durch eine Turbine wird ein elektrischer Generator angetrieben, wobei der Rotor des Generators im Wasser rotiert. Der Stator ist gegenüber dem Wasser durch ein Dichtelement abgeschottet.

Weiterhin ist aus der US 4,740,725 ein hydraulischer Mikroturbogenerator bekannt, welcher speziell zur Erzeugung der Elektroenergie für die Zündung eines gasbetriebenen Durchflußerhitzers dient.

Die beiden letztgenannten Lösungen weisen ein gemeinsames Gehäuse für Turbinenräder und Generator auf, sind jedoch nicht für einen Dauerbetrieb und hohe Leistungen konzipiert.

Der Erfindung liegt daher die Aufgabe zugrunde, einen Miniaturgenerator zu schaffen, welcher von strömenden Medien angetrieben werden kann, einfach und preiswert herstellbar ist, kleine Abmessungen bei hoher Leistung aufweist und für den Dauerbetrieb geeignet ist.

Diese Aufgabe wird erfindungsgemäß gelöst durch die Merkmale im kennzeichnenden Teil des Anspruches 1 in Verbindung mit den Merkmalen im Oberbegriff. Zweckmäßige Ausgestaltungen sind in den Unteransprüchen enthalten.

Ein besonderer Vorteil der Erfindung besteht darin, daß eine kontinuierliche Elektroenergieerzeugung durch den Einsatz strömender Medien gewährleistet werden kann, indem in einem gemeinsamen Gehäuse mindestens zwei Turbinenräder über eine Achse starr miteinander verbunden sind, die Turbinenräder in ihrem Inneren Permanentmagnete aufweisen, zwischen den Turbinenrädern Magnetspulen angeordnet sind und das Gehäuse Kanäle zur Zu- und Ableitung der strömenden Medien aufweist, wobei das gemeinsame Gehäuse aus zwei Chassiselementen besteht, welche nach außen durch Abdeckplatten verschlossen sind und im Inneren jedes Turbinenrades insgesamt vier Permanentmagneten angeordnet sind, welche bei Drehung in den drei Magnetspulen eine Spannung induzieren.

Die Erfindung soll nachstehend anhand eines in der Fig. dargestellten Ausführungsbeispieles erläutert werden.
Es zeigen:

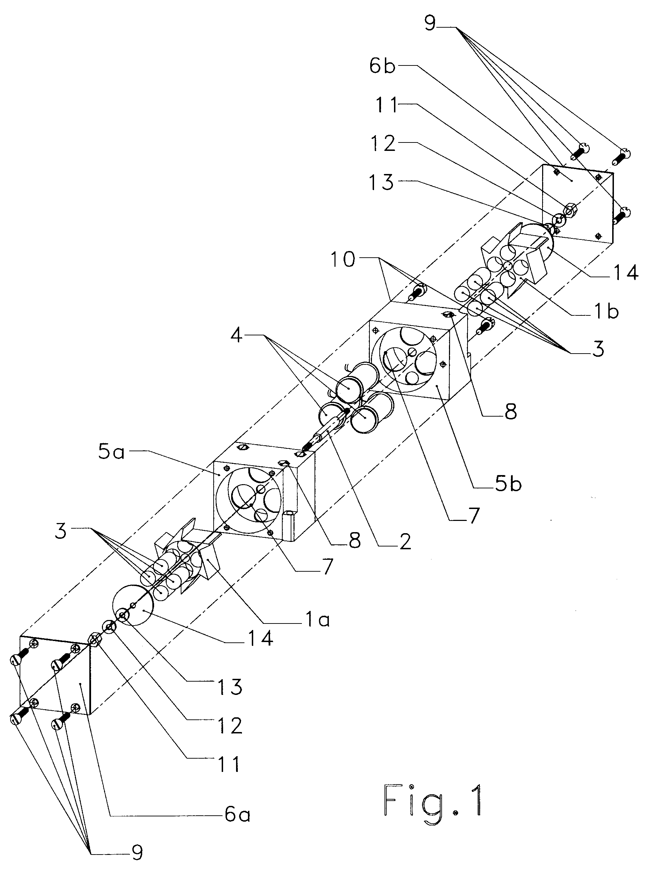

- Fig. 1: eine Explosivdarstellung des Miniaturgenerators und seiner Bestandteile.

Wie aus Fig. 1 zu ersehen ist, besteht der Miniaturgenerator aus zwei Chassiselementen 5a und 5b, in denen jeweils ein Turbinenrad 1a, 1b läuft. Diese beiden Turbinenräder 1a, 1b sind mit einer Achse 2 starr verbunden und so montiert, daß die Turbinenräder 1a, 1b zueinander um 30° verdreht sind. In den vier Bohrungen eines jeden Turbinenrades 1a, 1b befindet sich jeweils ein Permanentmagnet 3. Diese Permanentmagnete 3 sind von der Polarität her wechselseitig angeordnet. Jeder Permanentmagnet 3 eines Turbinenrades 1a bildet mit dem Permanentmagneten 3 des anderen Turbinenrades 1b eine magnetische Schranke. Zwischen den beiden Turbinenrädern 1a, 1b befinden sich drei , im Winkel von 120° angeordnete Magnetspulen 4, die vom magnetischen Fluß durchströmt werden.
Zwei Abdeckplatten 6a und 6b schließen das System luftdicht ab. Über Kanäle 8, die in den Chassiselementen 5a und 5b eingearbeitet sind, werden die Turbinenräder 1a, 1b mit Druckluft beaufschlagt. Eine weitere Öffnung gestattet, die Abluft kanalisiert abzuführen. Die Turbinenräder 1a, 1b und das Joch 14 sind mittels Sechskantmutter 11, Federring 12 und Scheibe 13 auf der Achse 2 befestigt. Die Schrauben 9 und 10 dienen der Montage des gesamten Miniaturgenerators.

Die Erfindung soll nachstehend noch im dynamischen Betrieb beschrieben werden.
Wird der Miniaturgenerator im vorliegenden Ausführungsbeispiel mit Druckluft beaufschlagt, so strömt die Druckluft auf die beiden Turbinenräder 1, 1b zu. Der entstehende Druck sorgt für die Drehung eines jeden Turbinenrades 1, 1b. Da die Turbinenräder 1a, 1b zueinander um 30° versetzt angeordnet sind, wird ein sicherer Anlauf garantiert. Durch die Drehung der Turbinenräder 1a, 1b und der Achse 2 beginnen auch die magnetischen Schranken sich konzentrisch um die Achse 2 zu drehen. Die wechselnde Polarität verursacht in den Magnetspulen 4 eine drehzahlabhängige Feldänderung. Diese Feldänderung induziert in den Magnetspulen 4 eine Spannung. Diese Spannung kann zur Versorgung von elektronischen Schaltungen bzw. Geräten verwendet werden. Durch die um 120° gedrehte Anordnung der Magnetspulen 4 entstehen drei Spannungen, die in einem Phasenwinkel von 120° zueinanderstehen. Durch diese Anordnung entsteht also ein Drei-Phasen-System.

Es hat sich als zweckmäßig erwiesen, den Miniaturgenerator in abgeschirmten Meßgeräten zur Erfassung der elektrischen und magnetischen Feldkomponenten einzusetzen, da durch die Zuleitung von Druckluft im Gegensatz zur Zuleitung von elektrischer Energie keine Beeinflussung der elektrischen und magnetischen Felder erfolgt.

### Bezugszeichenliste

- 1a: Turbinenrad
- 1b: Turbinenrad
- 2: Achse
- 3: Permanentmagnete
- 4: Magnetspulen
- 5a: Chassiselemente
- 5b: Chassiselemente
- 6a: Abdeckplatte
- 6b: Abdeckplatte
- 7: Öffnungen
- 8: Kanäle
- 9: Senkschrauben
- 10: Schrauben
- 11: Sechskantmutter
- 12: Federring
- 13: Scheibe
- 14: Joch

## Patentansprüche

1. Miniaturgenerator zur Erzeugung elektrischer Energie aus einem strömenden Medium, bei dem in einem gemeinsamen Gehäuse mindestens ein, vorzugsweise zwei über eine Achse (2) starr miteinander verbundene Turbinenräder (1a, 1b) angeordnet sind, das bzw. die Turbinenrad/räder (1a, 1b) in ihrem Inneren Permanentmagnete (3) aufweisen, axial neben dem Turbinenrad bzw. zwischen den Turbinenrädern (1a, 1b) Magnetspulen (4) angeordnet sind und das Gehäuse Kanäle (8) zur Zu- und Ableitung des strömenden Mediums aufweist.

2. Miniaturgenerator nach Anspruch 1,
dadurch gekennzeichnet,
daß das gemeinsame Gehäuse aus zwei Chassiselementen (5a, 5b) besteht, welche nach außen durch Abdeckplatten (6a, 6b) verschlossen sind.

3. Miniaturgenerator nach Anspruch 1,
dadurch gekennzeichnet,
daß im Inneren jedes Turbinenrades (1a, 1b) insgesamt vier Permanentmagneten (3) angeordnet sind.

4. Miniaturgenerator nach Anspruch 1,
dadurch gekennzeichnet,
daß drei Magnetspulen (4) im Winkel von 120° zueinander angeordnet sind.

5. Miniaturgenerator nach Anspruch 1, 2 oder 4,
dadurch gekennzeichnet,
daß die Chassiselemente (5a, 5b) drei um 120° versetzt angeordnete Öffnungen (7) zur Aufnahme der Magnetspulen (4) aufweisen.

6. Miniaturgenerator nach Anspruch 1,
dadurch gekennzeichnet,
daß die Turbinenräder (1a, 1b) jeweils sechs Turbinenschaufeln aufweisen.

7. Miniaturgenerator nach Anspruch 1 oder 6,
dadurch gekennzeichnet,
daß die Turbinenräder (1a, 1b) auf der Achse (2) um 30° zueinander versetzt angeordnet sind.

8. Miniaturgenerator nach Anspruch 1 oder 3,
dadurch gekennzeichnet,
daß die Permanentmagneten (3) im Inneren der Turbinenräder (1a, 1b) von der Polarität her wechselseitig angeordnet sind.

9. Miniaturgenerator nach Anspruch 1,
dadurch gekennzeichnet,
daß der Miniaturgenerator in einem Sensor zur Erfassung der elektrischen und magnetischen Felder als Stromversorgungseinheit angeordnet ist.

10. Miniaturgenerator nach Anspruch 1,
dadurch gekennzeichnet,
daß die strömenden Medien elektrisch nichtleitend sind.
